# EUROPÄISCHE PATENTANMELDUNG

(11) **EP 0 934 857 A2**
(43) Veröffentlichungstag der Anmeldung: **11.08.1999**
(21) Anmeldenummer: 99102194.0
(22) Anmeldetag: 04.02.1999
(51) Int. Cl.: B60R 25/00, B60R 16/02, E05B 49/00, B60R 25/04

(54) **Vorrichtung zur Freischaltung eines elektronischen Gerätes**

(30) Priorität: 07.02.1998 DE 19804923
(71) Anmelder: GRUNDIG Aktiengesellschaft, 90762 Fürth (DE)
(72) Erfinder: Ziegler, Cornelius, 90762 Fürth (DE)

(57) **Zusammenfassung**

Die Erfindung betrifft ein elektronisches Gerät (G), welches eine Einschaltvorrichtung, einen Mikrocomputer (6) zur Steuerung des Gerätes, eine Stromversorgungseinheit (4), einen ersten Sender (7), einen ersten Empfänger (8) und mindestens ein weiteres für die Funktion des Gerätes wesentliches Bauteil aufweist. Der Mikrocomputer (6) des Gerätes ist derart programmiert, daß er nach einem Einschalten des Gerätes die Aussendung eines Aufforderungssignals (A1) über den ersten Sender (7) steuert und den Gerätebetrieb nur dann freigibt oder aufrechterhält, wenn mittels des ersten Empfängers (8) ein vorgegebenes Antwortsignal (A2) empfangen wird. Zum Empfang des Aufforderungssignals (A1) und zur Aussendung des Antwortsignals (A2) ist vorzugsweise eine Armbanduhr (U) vorgesehen.

## Beschreibung

Die Erfindung betrifft ein elektronisches Gerät, welches eine Einschaltvorrichtung, einen Mikrocomputer zur Steuerung des Gerätes, eine Stromversorgungseinheit, einen ersten Sender, einen ersten Empfänger und mindestens ein weiteres, für die Funktion des Gerätes wesentliches Bauteil aufweist.

Derartige elektronische Geräte sind bereits bekannt. Es handelt sich dabei insbesondere um Geräte der Unterhaltungselektronik wie Kofferradios, Walkman und Radiorecorder. Weiterhin kann das elektronische Gerät auch ein Autoradio, ein Handy, ein tragbares Fernsehgerät oder ein Personal-Computer sein.

Aus der DE-A1-44 31 028 ist bereits ein funkgesteuertes Signalauslösesystem bekannt, mittels dessen fahrtvorbereitende Maßnahmen eingeleitet oder ausgelöst werden können, beispielsweise ein Einschalten der Heizung, eine Auslösung der Zentralverriegelung oder ein Starten eines Kraftfahrzeugs. Dieses bekannte System arbeitet mit einem Sender, der in eine Armbanduhr integriert ist.

Weiterhin ist aus der DE-A1-44 16 345 ein Diebstahlsicherungsverfahren und eine Diebstahlsicherungsvorrichtung bekannt. Bei dieser sendet ein ortsgebundener, nicht manipulierbarer Sender Signale aus, mittels derer die zum Betrieb des Gegenstands zwingend notwendige Elektronik aktiviert oder deaktiviert wird.

Aus der DE-C1-42 40 458 ist eine Vorrichtung zum Schutz von Kraftfahrzeugen und darin befindlichen elektronischen Geräten vor Diebstahl bekannt. Bei dieser Vorrichtung sendet ein im Zündschlüssel des Fahrzeugs vorgesehener Codesender Codesignale aus, wenn die Zündung eingeschaltet ist. Bei fehlendem Codesignal erfolgt eine Deaktivierung eines elektrischen Gerätes oder eine Alarmausgabe.

Ferner ist aus der DE-A1-44 30 886 eine funkgesteuerte Diebstahlsicherung bekannt. Diese weist eine in eine Armbanduhr integrierte externe Sende- und Empfangseinheit auf. Mittels Funktionstasten an der Armbanduhr werden Wirksignale erzeugt, die diebstahlhindernde Funktionen in einem diebstahlgefährdeten Objekt auslösen, z. B. eine Aktivierung der Bremse eines Fahrzeugs.

Ein weiteres Diebstahl-Sicherungssystem ist in der DE-A1 41 37 213 beschrieben. Bei diesem bekannten System ist in einem zu sichernden Objekt ein Bewegungsdetektor vorgesehen. Bei erkannter Bewegung wird eine Funkmeldung an einen tragbaren Empfänger abgestrahlt. Dort erfolgt die Ausgabe eines Alarmsignals.

Ausgehend von diesem Stand der Technik liegt der Erfindung die Aufgabe zugrunde, einen neuen Weg aufzuzeigen, wie eine Freischaltung eines elektronischen Gerätes in einfacher Weise realisiert werden kann.

Diese Aufgabe wird durch ein elektronisches Gerät mit den im Anspruch 1 angegebenen Merkmalen gelöst. Vorteilhafte Eigenschaften und Weiterbildungen der Erfindung ergeben sich aus den abhängigen Patentansprüchen 2 bis 5. Die Ansprüche 6 bis 9 betreffen einen Gerätesatz, der aus einem elektronischen Gerät nach einem der Ansprüche 1 bis 5 und einer am Körper eines Person tragbaren Sende- und Empfamgseinrichtung, insbesondere in einer Armbanduhr besteht, welche einen zweiten Sender und einen zweiten Empfänger aufweist, wobei der zweite Empfänger zum Empfang des vom elektronischen Gerät ausgesandten Aufforderungssignals und der zweite Sender zur Aussendung des vorgegebenen Antwortsignals an das elektronische Gerät vorgesehen ist.

Gemäß der Erfindung wird vom elektronischen Gerät nach dessen Einschalten zunächst ein Aufforderungssignal ausgesandt und der normale Gerätebetrieb nur dann aktiviert oder aufrechterhalten, wenn als Antwort auf die Aussendung des Aufforderungssignals ein Antwortsignal empfangen wird. Dieses Antwortsignal wird vorzugsweise in einer Armbanduhr erzeugt. Zum Normalbetrieb des Gerätes ist folglich immer notwendig, daß sich die das Antwortsignal aussendende Armbanduhr in der Nähe des elektronischen Gerätes befindet.

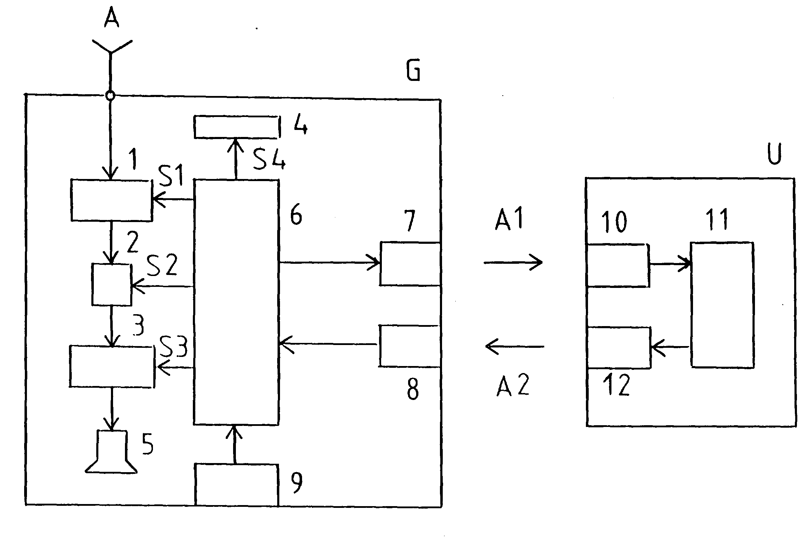

Weitere Vorteile der Erfindung ergeben sich aus deren beispielhafter Erläuterung anhand der Figur.

Diese zeigt in Form eines Blockschaltbildes die zum Verständnis der Erfindung wesentlichen Baugruppen eines elektronischen Gerätes G und einer Armbanduhr U, wobei das dargestellte elektronische Gerät G ein tragbares Radiogerät ist.

Das gezeigte Radiogerät weist eine Antenne A, ein Empfangsteil 1 mit einem Tuner, einen im Signalweg angeordneten Schalter 2, eine Signalverarbeitungsschaltung 3, eine Energieversorgung 4, einen Lautsprecher 5, einen Mikrocomputer 6, einen ersten Sender 7, einen ersten Empfänger 8 und eine Bedientastatur 9 mit einer Einschalttaste auf.

Die Armbanduhr U enthält einen zweiten Empfängern 10, eine Mikrocomputereinheit 11, die einen Signaldecoder und einen Signalcoder aufweist, und einen zweiten Sender 12.

Nach dem Einschalten des Radiogerätes G mittels der Einschalttaste der Bedientastatur 9, wodurch auch die Energieversorgung 4 aktiviert wird, initiiert der Mikrocomputer 6 die Aussendung eines Aufforderungssignals A1, welches vom zweiten Empfänger 10, der in der Armbanduhr U angeordnet ist, aufgenommen wird. Das ausgesendete Aufforderungssignal A1 ist vorzugsweise ein erstes Burstsignal mit vorgegebener Frequenz, ein erstes digitales Codesignal oder ein erstes analoges Kennsignal, welches einem Träger vorgegebener Frequenz aufmoduliert wurde. Das genannte Aufforderungssignal A1 kann ein Infrarotsignal sein, aber auch ein außerhalb des Infrarot-Frequenzbereiches liegendes Signal. Das vom zweiten Empfänger 10 empfangene Aufforderungssignal wird an die Mikrocomputereinheit 11 weitergeleitet. Dort erfolgt eine Decodierung des Signals und ein Vergleich mit einem abgespeicherten Referenzsignal, welches ein Sollwert für das Aufforderungssignal ist. Stimmen die beiden Signale überein, dann initiiert die Mikrocomputereinheit die Erzeugung eines Antwortsignals A2, welches vom zweiten Sender 12 ausgesandt wird. Dieses Antwortsignal A2 ist entweder ein zweites, vom ersten Burstsignal verschiedenes Burstsignal, ein zweites, vom ersten digitalen Codesignal verschiedenes digitales Codesignal oder ein zweites, vom ersten analogen, trägermodulierten Kennsignal verschiedenes analoges, trägermoduliertes Kennsignal.

Dieses vom zweiten Sender 12 ausgestrahlte Antwortsignal A2 wird vom ersten Empfänger 8, der im Radiogerät G angeordnet ist, empfangen und an den Mikrocomputer 6 des Radiogerätes weitergeleitet. Dort erfolgt eine Decodierung des empfangenen Signals und ein Vergleich mit einem dort abspeicherten weiteren Referenzsignal, welches ein Sollwert für das Antwortsignal ist. Stimmen die beiden Signale überein, dann gibt der Mikrocomputer 6 den Betrieb des Gerätes G frei.

Dies kann dadurch geschehen, daß der Mikrocomputer 6 ein Steuersignal S1 für das Empfangsteil 1, ein Steuersignal S2 für den im Signalweg angeordneten Schalter 2 oder ein Steuersignal S3 für die Signalverarbeitungsschaltung 3 erzeugt, wobei das Empfangsteil 1 und die Signalverarbeitungsschaltung 3 durch das jeweils zugehörige Steuersignal aktiviert werden und der Schalter 2 durch das Steuersignal S2 in den leitenden Zustand gebracht wird.

Alternativ dazu ist es auch möglich, daß die genannten Baugruppen bereits durch das Einschalten des Gerätes aktiviert werden und daß der Mikrocomputer 6 bei empfangenem korrekten Antwortsignal den Betrieb dieser Baugruppen aufrecht erhält und beim Ausbleiben bzw. nach einer vorgegebenen Zeit des Ausbleibens eines korrekten Antwortsignals das Empfangsteil 1, die Signalverarbeitungsschaltung 3 oder die Stromversorgung 4 deaktiviert und dadurch den weiteren Gerätebetrieb unterbindet. Der weitere Gerätebetrieb kann auch dadurch unterbunden werden, daß mittels des Steuersignals S2 der Schalter 2 vom leitenden in den nicht leitenden Zusand gebracht wird.

Gemäß einer vorteilhaften Weiterbildung der Erfindung ist der Mikrocomputer 6 derart programmiert, daß er nach dem Einschalten des Gerätes eine in regelmäßigen Zeitabständen erfolgende Aussendung des Aufforderungssignals A1 steuert. Der Betrieb des Gerätes wird solange aufrechterhalten, wie ein korrektes Antwortsignal A2 empfangen werden kann. Ist dies nicht mehr der Fall, erfolgt eine Abschaltung des Gerätes durch eine Deaktivierung der Stromversorgung 4 oder einer anderen funktionswesentlichen Baugruppe des Gerätes.

Ein ordnungsgemäßer Gerätebetrieb ist demnach nur dann möglich, wenn sich die Armbanduhr in der Nähe des Gerätes befindet. Dadurch hat der Benutzer die Möglichkeit, den Gebrauch des Gerätes zu kontrollieren und für unbefugte Personen, die nicht im Besitz der Armbanduhr sind, besteht keine Möglichkeit, das Gerät in Betrieb zu nehmen.

Handelt es sich bei dem elektronischen Gerät um ein Autoradio, dann kann auf die oben beschriebene Weise eine Diebstahlsicherung erreicht werden, da ein potentieller Dieb durch einen beispielsweise auf der Autoscheibe aufgebrachten Aufkleber auf die beschriebene Eigenschaft des Autoradios aufmerksam gemacht werden kann und dadurch erkennt, daß ein Diebstahl des Autoradios zwecklos ist.

Handelt es sich bei dem elektronischen Gerät um ein Fernsehgerät, dann kann die oben beschriebene Erfindung im Sinne einer Kindersicherung genutzt werden, wenn die Armbanduhr beispielsweise vom Erziehungsberechtigten getragen wird. In diesem Fall haben die Kinder keine Möglichkeit, ohne das Wissen und das Einverständnis der jeweiligen erziehungsberechtigten Person das Fernsehgerät in Betrieb zu nehmen oder lediglich vorbestimmte Funktionen des Fernsehgerätes aktiviert werden können. In diesem Zusammenhang ist es beispielsweise möglich, das Gerät in Anwesenheit des die Armbanduhr tragenden Erwachsenen in Betrieb zu nehmen. Ist der Mikrocomputer derart programmiert, daß er nach dem Einschalten des Gerätes nur einmalig auf den Empfang des erforderlichen Antwortsignals wartet, dann wird der Betrieb des Gerätes nach diesem einmaligen Empfang solange aufrechterhalten, bis das Gerät mittels der Bedientastatur ausgeschaltet wird. Dies hat den Vorteil, daß sich der die Armbanduhr tragende Erziehungsberechtigte nach dem Einschalten des Gerätes wieder aus dem Zimmer entfernen kann, ohne daß der Betrieb des Fernsehgerätes automatisch beendet wird.

Handelt es sich bei dem elektronischen Gerät um einen in einem Firmengelände angeordneten Personal-Computer, dann kann dessen rechtmäßiger Benutzer erreichen, daß während seiner Abwesenheit keiner seiner Kollegen oder Kolleginnen den Computer ohne sein Wissen in Betrieb nimmt.

## Patentansprüche

1. Elektronisches Gerät, welches eine Einschaltvorrichtung, einen Mikrocomputer zur Steuerung des Gerätes, eine Stromversorgungseinheit, einen ersten Sender, einen ersten Empfänger und mindestens ein weiteres, für die Funktion des Gerätes wesentliches Bauteil aufweist,
**dadurch gekennzeichnet**,
daß der Mikrocomputer (6) derart programmiert ist, daß er nach einem Einschalten des Gerätes die Aussendung eines Aufforderungssignals (A1) über den ersten Sender (7) steuert und den Gerätebetrieb nur dann freigibt oder aufrechterhält, wenn mittels des ersten Empfängers (8) ein vorgegebenes Antwortsignal (A2) empfangen wird.

2. Elektronisches Gerät nach Anspruch 1,
**dadurch gekennzeichnet**,
daß der Mikrocomputer (6) derart programmiert ist, daß er beim Ausbleiben des vorgegebenen Antwortsignals entweder die Stromversorgungseinheit (4) deaktiviert oder mindestens ein für die Funktion des Gerätes (G) wesentliches Bauteil deaktiviert oder deaktiviert hält.

3. Elektronisches Gerät nach Anspruch 1 oder 2,
**dadurch gekennzeichnet**,
daß der Mikrocomputer (6) derart programmiert ist, daß er nach dem Einschalten des Gerätes (G) eine in regelmäßigen Zeitabständen erfolgende Aussendung des Aufforderungssignals (A1) steuert.

4. Elektronisches Gerät nach einem der vorhergehenden Ansprüche,
**dadurch gekennzeichnet**,
daß das Aufforderungssignal (A1) ein erstes Burstsignal, ein erstes digitales Codesignal oder ein erstes analoges, trägermoduliertes Kennsignal ist.

5. Elektronisches Gerät nach einem der vorhergehenden Ansprüche,
**dadurch gekennzeichnet**,
daß es ein Unterhaltungselektronikgerät, ein Autoradio, ein Handy oder ein Personal-Computer ist.

6. Gerätesatz, bestehend aus einem elektronischen Gerät nach einem der Ansprüche 1 bis 5 und einer am Körper eines Person tragbaren Sende- und Empfamgseinrichtung, insbesondere in einer Armbanduhr (U), welche einen zweiten Sender (12) und einen zweiten Empfänger (10) aufweist, wobei der zweite Empfänger zum Empfang des Aufforderungssignals und der zweite Sender zur Aussendung des vorgegebenen Antwortsignals vorgesehen ist.

7. Gerätesatz nach Anspruch 6,
**dadurch gekennzeichnet**,
daß die am Körper eines Person tragbare Sende- und Empfamgseinrichtung, insbesondere eine Armbanduhr, eine Signalverarbeitungsschaltung (11) aufweist, die zur Auswertung des empfangenen Aufforderungssignals und zur Erzeugung des vorgegebenen Antwortsignals vorgesehen ist.

8. Gerätesatz nach Anspruch 6 oder 7,
**dadurch gekennzeichnet**,
daß das Antwortsignal ein vom ersten Burstsignal verschiedenes zweites Burstsignal, ein vom ersten digitalen Codesignal verschiedenes zweites Codesignal oder ein vom ersten analogen, trägermodulierten Kennsignal verschiedenes zweites analoges, trägermoduliertes Kennsignal ist.

9. Gerätesatz nach einem der Ansprüche 6 bis 8,
**dadurch gekennzeichnet**,
daß die Signalverarbeitungsschaltung ein Antwortsignal als Reaktion auf den Empfang eines Aufforderungssignals erzeugt.
